# EUROPEAN PATENT APPLICATION

(11) **EP 4 503 192 A1**
(43) Date of publication of application: **05.02.2025**
(21) Application number: 22933727.4
(22) Date of filing: 01.04.2022
(51) Int. Cl.: H01M 4/62, H01M 4/133, H01M 4/04, C08L 31/04, C08L 23/08, C08G 61/12

(54) **BINDER FOR SECONDARY BATTERY, SLURRY COMPRISING SAME, ELECTRODE AND SECONDARY BATTERY**

(30) Priority: 25.03.2022 KR 20220037533
(71) Applicant: Hansol Chemical Co., Ltd, Seoul 06169 (KR); SK On Co., Ltd., Seoul 03188 (KR)
(72) Inventor: HAN, Jaehee, Jeollabuk-do 55321 (KR); KIM, Chang Beom, Jeollabuk-do 55321 (KR); KIM, Kwangin, Jeollabuk-do 55321 (KR); KWON, Se Man, Jeollabuk-do 55321 (KR); KIM, Sung Do, Daejeon 34125 (KR); KIM, Jeong A, Daejeon 35228 (KR); LIM, Jonghwi, Seoul 07535 (KR); JEONG, Kwang Ho, Daejeon 34124 (KR)
(74) Representative: Gevers Patents
(86) International application number: PCT/KR2022/004734
(87) International publication number: WO 2023/182554

(57) **Abstract**

The present invention provides A binder for a rechargeable battery, comprising: a water-soluble polymer and a conductive polymer, wherein, the water-soluble polymer comprises a first copolymer, the conductive polymer comprises a second copolymer and a polymer of a conductive monomer, and the second copolymer has a degree of hydrolysis of more than 50% and an absorbance peak of more than 22% appearing at 3250 cm⁻¹ to 3350 cm⁻¹ in the FT-IR spectrum; a slurry including the same; an electrode and a rechargeable battery including the same.

## Description

### FIELD OF THE INVENTION

The present invention relates to a binder for a rechargeable battery including a conductive polymer, a slurry including the binder, an electrode, and a rechargeable battery. Specifically, the present invention relates to a binder for a rechargeable battery including a conductive polymer capable of implementing excellent characteristics by controlling the degree of hydrolysis of a water-soluble monomer used in the production of a conductive polymer for a rechargeable battery, a slurry including the same, an electrode, and a rechargeable battery.

### DESCRIPTION OF THE RELATED ART

Lithium batteries are used as power sources for portable electronic devices such as video cameras, mobile phones, and laptop computers. Rechargeable lithium secondary batteries have an energy density per unit weight that is three times higher than that of conventional lead-acid batteries, nickelcadmium batteries, nickel-hydrogen batteries, and nickel-zinc batteries, and are capable of high-speed charging.

In general, lithium secondary batteries are manufactured by using materials that enable reversible intercalation and deintercalation of lithium ions as positive electrode active materials and negative electrode active materials, and charging electrolyte between the positive electrode active material and the negative electrode active material.

Meanwhile, among electrode materials, the binder plays a main role in maintaining the plate structure, but it also affects the characteristics of the electrode and lithium secondary battery manufactured using it. In order to improve the performance of the binder, a water-soluble conductive polymer can be added. However, the existing water-soluble monomer used in the production of water-soluble conductive polymer has drawbacks in that when the content of PEDOT relative to the polymer increases, coagulation occurs and the dispersive power is deteriorated, resulting in low workability and decreased electrical conductivity. In addition, when the content of PEDOT increases during the production of slurry, the viscosity decreases, which adversely affects the rheology of the slurry. In addition, although conductive polymers with excellent dispersibility are easy to process, there are cases where the electrical conductivity inside the electrode is reduced due to low electrical conductivity, which affects the electrode performance. Therefore, research on conductive polymers that can overcome these drawbacks is needed.

### SUMMARY OF THE INVENTION

The purpose of the present invention is to provide a binder for a rechargeable battery including a conductive polymer capable of implementing excellent characteristics by controlling the degree of hydrolysis of a water-soluble monomer used in the production of a conductive polymer for a rechargeable battery, a slurry including the same, an electrode, and a rechargeable battery, in order to solve the problem of the conventional art.

According to an embodiment, a binder for a rechargeable battery includes a water-soluble polymer and a conductive polymer, wherein the water-soluble polymer includes a first copolymer, the conductive polymer includes a second copolymer and a polymer of a conductive monomer, and the second copolymer has a degree of hydrolysis of 50% or more, and an absorbance peak appearing at 3,250 cm⁻¹ to 3,350 cm⁻¹ in an FT-IR spectrum may be 22% or more.

The first copolymer is a copolymer of a polymer containing polar functional groups and PAA, and the degree of hydrolysis may not be controlled.

The first copolymer may be PVA-PAA with uncontrolled hydrolysis degree.

The second copolymer is a copolymer of a polymer containing polar functional groups and PAA, and may have a controlled degree of hydrolysis.

The second copolymer may be PVA-PAA with controlled degree of hydrolysis.

The conductive monomer may be at least one selected from the group consisting of EDOT (3,4-Ethylenedioxythiophene), a thiophene-based monomer, polyacetylene, polyaniline, and polypyrrole.

The conductive polymer may contain a second copolymer to a conductive monomer in a weight ratio of 1:0.5 to 20.

It can contain water-soluble polymer to conductive polymer in a ratio of 4 to 6:1.

A slurry according to an embodiment may include an electrode active material; and a binder as described above.

The electrode active material is contained at 95 to 99 wt%, with 100 wt% of the total slurry as a reference, and the binder is contained at 1 to 5 wt%.

An electrode according to an embodiment can be formed by applying and drying the above-described slurry on the surface of a current collector.

A rechargeable battery according to an embodiment includes a positive electrode; a negative electrode; an electrolyte interposed therebetween; and a separator inserted between the positive electrode and the negative electrode, wherein at least one selected from the positive electrode and the negative electrode may be the above-described electrode.

A binder for a rechargeable battery comprising a conductive polymer according to an embodiment has high dispersion and high electric conductivity characteristics.

The slurry according to the embodiment has excellent disperse stability.

An electrode according to an embodiment has excellent electrode conductivity.

Additionally, the rechargeable battery according to an embodiment has improved battery internal resistance and life-span characteristics.

### BRIEF DESCRIPTION OF THE DRAWINGS

FIG. 1 is a graph showing the hydrolysis degree of PAA-1 and PAA-5 manufactured in the Preparation Example of the present invention, measured using FT-IR.
FIG. 2 is a photograph confirming the presence or absence of phase separation in the conductive polymer binder of embodiment 2 and comparative example 2.
FIG. 3 is a photograph showing the dispersion stability of slurries of Comparative Example 1, Comparative Example 2, embodiment 1, and embodiment 2 of the present invention evaluated using a grind guage.
FIG. 4 is an electrochemical evaluation result graph targeting the lithium secondary battery of Comparative Example 1, Comparative Example 2, embodiment 1, and embodiment 2 of the present invention.

### DETAILED DESCRIPTION OF THE EMBODIMENTS

The terms such as first, second, and third are used to describe various portions, components, regions, layers, and/or sections, but various parts, components, regions, layers, and/or sections are not limited to these terms. These terms are only used to distinguish one part, component, region, layer, or section from another part, component, region, layer, or section. Accordingly, a first part, component, region, layer, or section described below may be referred to as a second part, component, region, layer, or section without departing from the scope of the present invention.

Terminologies as used herein are to mention only a specific exemplary embodiment, and are not to limit the present invention. Singular forms used herein include plural forms as long as phrases do not clearly indicate an opposite meaning. The term "including/comprising/containing/having" as used herein concretely indicates specific characteristics, regions, integer numbers, steps, operations, elements, and/or components, and is not to exclude presence or addition of other specific characteristics, regions, integer numbers, steps, operations, elements, and/or components.

When any portion is referred to as being "above" or "on" another portion, any portion may be directly above or on another portion or be above or on another portion with the other portion interposed therebetween. In contrast, when any portion is referred to as being "directly on" another portion, the other portion is not interposed between any portion and another portion.

Unless otherwise specified, % means wt%, and 1 ppm is 0.0001 wt%.

Unless defined otherwise, all terms including technical terms and scientific terms as used herein have the same meaning as the meaning generally understood by a person of an ordinary skill in the art to which the present invention pertains. Terms defined in a generally used dictionary are additionally interpreted as having the meaning matched to the related art document and the currently disclosed contents and are not interpreted as ideal or formal meaning unless defined.

Below, an embodiment is described in detail so that a person of ordinary skill in the technical field to which the present invention belongs can easily carry out the present invention. As those skilled in the art would realize, the described embodiments may be modified in various different ways, all without departing from the spirit or scope of the present invention.

According to an embodiment, a binder for a rechargeable battery includes a water-soluble polymer and a conductive polymer, wherein the water-soluble polymer includes a first copolymer, the conductive polymer includes a second copolymer and a polymer of a conductive monomer, and the second copolymer has a degree of hydrolysis of 50% or more, and an absorbance peak appearing at 3,250 cm⁻¹ to 3,350 cm⁻¹ in an FT-IR spectrum may be 22% or more.

A water-soluble polymer is added to enhance the bonding strength between the active material and electrode, and a conductive polymer is added to improve the electrical conductivity of the binder. According to an embodiment, a binder for a rechargeable battery can obtain a functional binder in which both binder adhesion and electrical conductivity are improved by using a mixture of a water-soluble polymer and a conductive polymer.

In a binder for a rechargeable battery according to an embodiment, the conductive polymer may include a polymer of a second copolymer and a conductive monomer. Dispersion and electrical conductivity can be improved by including a polymer of a second copolymer and a conductive monomer.

The second copolymer can have a degree of hydrolysis greater than 50%. Specifically, the second copolymer can have a degree of hydrolysis of greater than or equal to 60%, and more specifically, can have a degree of hydrolysis of greater than or equal to 70%. If the hydrolysis degree of the second copolymer is too low, the dispersion of the manufactured conductive polymer is low, the stability of the slurry becomes poor, and a performance degradation problem of the electrode may occur.

According to an embodiment, a binder for a rechargeable battery may have an absorbance peak of 22% or more appearing at 3,250 cm⁻¹ to 3,350 cm⁻¹ in the FT-IR spectrum of a second copolymer. In the FT-IR spectrum, the size of the peak can be quantified based on the absorbance, peak area, and peak shape. Specifically, the larger the absorbance (%) (= 100% - transmittance (%)), the wider the peak area, and the sharper the peak shape, the larger the peak size. As the degree of hydrolysis of the second copolymer increases, it contains more polar functional groups such as -OH and -COOH in the chain structure, so the absorbance increases and the size of the O-H peak in the 3,250 cm⁻¹ to 3,350 cm⁻¹ range of the FT-IR spectrum increases. Specifically, the absorbance peak appearing at 3,250 cm⁻¹ to 3,350 cm⁻¹ in the FT-IR spectrum can be 23% or more.

The first copolymer is a copolymer of a polymer containing polar functional groups and PAA, and the degree of hydrolysis may not be controlled. By using a copolymer of PAA and a polymer containing a polar functional group as the first copolymer, the effect of improving the bonding strength and dispersion of the active material and electrode can be obtained compared to when PAA or PSS is used alone. Specifically, the first copolymer may be one or more selected from the group consisting of PVA-PAA, PEO-PAA, PPO-PAA, HEA-PAA, PHEA-PAA, PVP-PAA, PAM-PAA, PAN-PAA, PVAM-PAA, etc., whose hydrolysis degree is not controlled. More specifically, the first copolymer may be PVA-PAA with uncontrolled degree of hydrolysis. In addition, if the hydrolysis degree is controlled with the first copolymer, problems such as reduced binding strength and dispersion of the binder may occur. For the first copolymer whose hydrolysis degree is not controlled, a hydrolysis degree of 0% to 10% can be exhibited.

The second copolymer is a copolymer of a polymer containing polar functional groups and PAA, and may have a controlled degree of hydrolysis. By using a copolymer of PAA and a polymer containing a polar functional group as a second copolymer, the bonding force and dispersion of the active material and electrode can be improved compared to when PAA or PSS is used alone. Specifically, the second copolymer can be one or more selected from the group consisting of PVA-PAA, PEO-PAA, PPO-PAA, HEA-PAA, PHEA-PAA, PVP-PAA, PAM-PAA, PAN-PAA, PVAM-PAA having a controlled degree of hydrolysis. More specifically, the second copolymer can be PVA-PAA with controlled degree of hydrolysis. If a second copolymer is used whose hydrolysis degree is not controlled, problems such as deterioration of dispersion and electrical conductivity may occur.

The conductive monomer may be at least one selected from the group consisting of EDOT (3,4-Ethylenedioxythiophene), a thiophene-based monomer, polyacetylene, polyaniline, and polypyrrole, but is not limited thereto. Specifically, the conductive monomer can be EDOT.

The conductive polymer can contain a second water-soluble monomer to a conductive monomer in a weight ratio of 1:0.5 to 20. Specifically, the second water-soluble monomer to the conductive monomer can be included in a ratio of 1:0.5 to 10. More specifically, the second water-soluble monomer to the conductive monomer may be included in a ratio of 1:0.5 to 2. If the ratio of the second copolymer (PAA-x) is too low compared to the conductive monomer (EDOT), a problem of deterioration of electrical conductivity may occur. Conversely, if the ratio of the second copolymer is too high compared to the conductive monomer, a problem of low dispersion may occur.

It can contain water-soluble polymer to conductive polymer in a ratio of 4 to 6:1. If the ratio of water-soluble polymer (PVA-PAA) is too low compared to conductive polymer (PEDOT:PAA-x), a problem of reduced adhesion between active material and electrode may occur. Conversely, if the ratio of water-soluble polymer is too high compared to the conductive polymer, a problem of deterioration of the electrical conductivity of the electrode may occur.

A slurry according to an embodiment may include an electrode active material; and a binder as described above. The slurry according to the embodiment may further contain a solvent, conductive material, etc., as needed. Specifically, the slurry according to an embodiment may contain 95 to 99 wt% of electrode active material and 1 to 5 wt% of binder, with 100 wt% of the entire slurry as a reference. More specifically, the electrode active material may be included in an amount of 96 to 98 wt%, and the binder may be included in an amount of 2 to 4 wt%, with 100 wt% of the entire slurry as a reference. If the content of the included electrode active material is too small, a problem of deterioration of the electrochemical performance of the battery may occur, and if the content of the included electrode active material is too large, a problem of electrode manufacturing being impossible (bonding deterioration) may occur. In addition, if the content of the included binder is too small, a problem of reduced active material and electrode adhesion may occur, and if the content of the included binder is too large, a problem of increased battery resistance may occur.

The electrode active material may be a positive electrode active material or a negative electrode active material.

The positive electrode active material is a lithium-containing metal oxide, and any material commonly used in the art can be used without limitation. For example, one or more of a composite oxide of lithium and a metal selected from cobalt, manganese, nickel, and a combination thereof may be used. As a specific example, a compound expressed by any one of the following Chemical Formulas can be used. LiₐA_{1-b}B¹_{b}D¹₂ (wherein, in the above formula, 0.90 ≤ a ≤ 1.8, and 0 ≤ b ≤ 0.5); LiₐE_{1-b}B¹_{b}O_{2-c}D¹_{c} (wherein, in the above formula, 0.90 ≤ a ≤ 1.8, 0 ≤ b ≤ 0.5, 0 ≤ c ≤ 0.05); LiE_{2-b}B¹_{b}O_{4-c}D¹_{c} (wherein, in the above formula, 0 ≤ b ≤ 0.5, 0 ≤ c ≤ 0.05); LiₐNi_{1-b-c}Co_{b}B¹_{c}D¹_{α} (wherein, in the above formula, 0.90 ≤ a ≤ 1.8, 0 ≤ b ≤ 0.5, 0 ≤ c ≤ 0.05, 0 < α ≤ 2); LiₐNi_{1-b-c}Co_{b}B¹_{c}O_{2-α}F¹_{α}(wherein, in the above formula, 0.90 ≤ a ≤ 1.8, 0 ≤ b ≤ 0.5, 0 ≤ c ≤ 0.05, 0 < α < 2); LiₐNi_{1-b-c}Co_{b}B¹_{c}O_{2-α}F¹₂ (wherein, in the above formula, 0.90 ≤ a ≤ 1.8, 0 ≤ b ≤ 0.5, 0 ≤ c ≤ 0.05, 0 < α < 2); LiₐNi_{1-b-c}Mn_{b}B¹_{c}D¹_{α} (wherein, in the above formula, 0.90 ≤ a ≤ 1.8, 0 ≤ b ≤ 0.5, 0 ≤ c ≤ 0.05, 0 < α ≤ 2); LiₐNi_{1-b-c}Mn_{b}B¹_{c}O_{2-α}F¹_{α} (wherein, in the above formula, 0.90 ≤ a ≤ 1.8, 0 ≤ b ≤ 0.5, 0 ≤ c ≤ 0.05, 0 < α < 2); LiₐNi_{1-b-c}Mn_{b}B¹_{c}O_{2-α}F¹₂ (wherein, in the above formula, 0.90 ≤ a ≤ 1.8, 0 ≤ b ≤ 0.5, 0 ≤ c ≤ 0.05, 0 < α < 2); LiₐNi_{b}E_{c}G_{d}O₂(wherein, in the above formula, 0.90 ≤ a ≤ 1.8, 0 ≤ b ≤ 0.9, 0 ≤ c ≤ 0.5, 0.001 ≤ d ≤ 0.1.); LiₐNi_{b}Co_{c}Mn_{d}GₑO₂ (wherein, in the above formula, 0.90 ≤ a ≤ 1.8, 0 ≤ b ≤ 0.9, 0 ≤ c ≤ 0.5, 0 ≤ d ≤0.5, 0.001 ≤ e ≤ 0.1); LiₐNiG_{b}O₂(wherein, in the above formula, 0.90 ≤ a ≤ 1.8, 0.001 ≤ b ≤ 0.1); LiₐCoG_{b}O₂ (wherein, in the above formula, 0.90 ≤ a ≤ 1.8, 0.001 ≤ b ≤ 0.1); LiₐMnG_{b}O₂ (wherein, in the above formula, 0.90 ≤ a ≤ 1.8, 0.001 ≤ b ≤ 0.1); LiₐMn₂G_{b}O₄ (wherein, in the above formula, 0.90 ≤ a ≤ 1.8, 0.001 ≤ b ≤ 0.1); QO₂; QS₂; LiQS₂; V₂O₅; LiV₂O₅; LiI¹O₂; LiNiVO₄; Li(_{3-f})J₂ PO₄₃ (0 ≤ f ≤ 2); Li_{(3-f)}Fe₂ PO₄₃ (0 ≤ f ≤ 2); LiFePO₄.

In the above formula, A is Ni, Co, Mn, or combination thereof; B¹ is Al, Ni, Co, Mn, Cr, Fe, Mg, Sr, V, rare earth element or combination thereof; D' is O, F, S, P, or combination thereof; E is Co, Mn, or combination thereof; F¹ is F, S, P, or combination thereof; G is Al, Cr, Mn, Fe, Mg, La, Ce, Sr, V, or combination thereof; Q is Ti, Mo, Mn, or combination thereof; I is Cr, V, Fe, Sc, Y, or combination thereof; J is V, Cr, Mn, Co, Ni, Cu, or combination thereof.

Specifically, LiCoO₂, LiMnₓO₂ₓ (x = 1, 2), LiNi₁₋ₓMnₓO₂ₓ (0 < x < 1), LiNi_{1-x-y}CoₓMn_{y}O₂ (0 ≤ x ≤ 0.5, 0 ≤ y ≤ 0.5), LiFePO₄, etc can be used.

Of course, it is possible to use a compound having a coating layer on the compound surface, or a mixture of the compound and the compound having a coating layer can be used. This coating layer may include a coating element compound of an oxide of the coating element, a hydroxide of the coating element, an oxyhydroxide of the coating element, an oxycarbonate of the coating element, or a hydroxycarbonate of the coating element. The compounds forming these coating layers can be amorphous or crystalline. The coating elements included in the coating layer may include Mg, Al, Co, K, Na, Ca, Si, Ti, V, Sn, Ge, Ga, B, As, Zr or mixture thereof. The coating layer forming process can be performed by any coating method (e.g., spray coating, immersion method, etc.) that does not adversely affect the properties of the positive electrode active material by using these elements in the compound. Since this is well-understood by those working in the field, a detailed explanation will be omitted.

The negative electrode active material may be any material that can be used as a negative electrode active material for a lithium secondary battery in the relevant technical field. For example, it may include one or more selected from the group consisting of lithium metal, a metal alloyable with lithium, a transition metal oxide, a non-transition metal oxide, and a carbon-based material.

Specifically, the metal that can be alloyed with lithium may be Si, Sn, Al, Ge, Pb, Bi, Sb Si-Y alloy (wherein Y is an alkali metal, an alkaline-earth metal, a group 13 element, a group 14 element, a transition metal, a rare earth element or a combination thereof, but not Si), Sn-Y alloy (wherein Y is an alkali metal, an alkaline-earth metal, a group 13 element, a group 14 element, a transition metal, a rare earth element or a combination thereof, but not Sn), etc. The element Y can include Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, or Te.

Specifically, the transition metal oxide can be lithium titanium oxide, vanadium oxide, lithium vanadium oxide, etc.

Specifically, the non-transition metal oxide can be SnO₂, SiOx (0 < x < 2), etc.

Specifically, the carbon-based material can be crystalline carbon, amorphous carbon or a mixture thereof. The crystalline carbon can be graphite such as natural graphite or artificial graphite in the form of amorphous, platelet, flake, spherical shape or fiber, and the amorphous carbon can be soft carbon (low temperature sintering carbon) or hard carbon, mesophase pitch carbide, sintered cokes, etc. More specifically, the carbon-based material may be graphite.

As a solvent, N-methylpyrrolidone, acetone or water can be used, but is not limited to these, and any solvent that can be used in the relevant technical field can be used.

Carbon black, graphite particulate, etc. can be used as conductive materials, but are not limited thereto, and anything that can be used as a conductive material in the relevant technical field can be used.

An electrode according to an embodiment can be formed by applying and drying the above-described slurry on the surface of a current collector.

A rechargeable battery according to an embodiment includes a positive electrode; a negative electrode; an electrolyte interposed therebetween; and a separator inserted between the positive electrode and the negative electrode, wherein at least one selected from the positive electrode and the negative electrode may be the above-described electrode.

Any separator commonly used in lithium batteries can be used. A material that has excellent electrolyte impregnation ability and low resistance to ion movement of electrolyte can be used. Specifically, it may be selected from glass fiber, polyester, TEFLON, polyethylene, polypropylene, polytetrafluoroethylene (PTFE) or a combination thereof, and may be in the form of a non-woven fabric or a woven fabric. Specifically, a woundable polyolefin separator such as polyethylene or polypropylene can be used for lithium ion batteries, and an excellent separator with organic electrolyte impregnation ability can be used for lithium ion polymer batteries.

The electrolyte may be an organic electrolyte. Organic electrolytes can be manufactured by dissolving lithium salt in an organic solvent.

Any organic solvent that can be used as an organic solvent in the relevant technical field can be used. Specifically, it may include at least one selected from the group consisting of ethylmethylcarbonate (EMC), methylpropylcarbonate, ethylpropylcarbonate, dimethylcarbonate (DMC), diethylcarbonate (DEC), dipropylcarbonate, propylenecarbonate (PC), ethylenecarbonate (EC), fluoroethylenecarbonate (FEC), vinylene carbonate (VC), vinylethylene carbonate (VEC), butylenecarbonate, ethylpropionate, ethylbutyrate, dimethylsulfoxide, dimethyl formamide, dimethyl acetamide, gamma-valerolactone, gamma-butyrolactone, and tetrahydrofuran, but is not limited thereto, and any organic solvent that can be used in the relevant technical field can be used.

Any lithium salt that can be used as a lithium salt in the relevant technical field can be used. Specifically, LiPF₆, LiBF₄, LiSbF₆, LiAsF₆, LiClO₄, LiCFsSOs, Li(CF₃SO₂)₂N, LiC₄F₉SO₃, LiAlO₂, LiAlCl₄, LiN(CₓF₂ₓ₊₁SO₂)(C_{y}F_{2y+1}SO₂)(x, and y are natural numbers), LiCI, Lil or mixture thereof, etc can be used.

Additionally, the electrolyte can be solid. Specifically, it may be boron oxide, lithium oxy nitride, etc., but is not limited thereto, and anything that can be used as a solid electrolyte in the relevant technical field may be used. The solid electrolyte can be formed on the negative electrode by a method such as sputtering.

The following is a detailed description of an embodiment so that a person with ordinary skill in the technical field to which the present invention belongs can easily practice it. However, the present invention may be implemented in many different forms and is not limited to the embodiments described herein.

### Preparation Example - PVA-PAA polymer synthesis and hydrolysis

### (1) PVA-PAA polymer synthesis without hydrolysis control

1,050g of distilled water as a solvent and 10g of an emulsifier (Dowfax) were added to the reactor and stirred for 1 hour under a nitrogen atmosphere, after which 2.5g of initiator (KPS, potassium persulfate) was added. 140 g of Vinyl acetate and 350 g of Ethyl acrylate as monomers were added dropwise to the reactor over 3 hours, and polymerization was performed at 65°C for 1 hour to produce PVA-PAA (Polyvinylacetate-Polyethylacrylate) copolymer. (Hereinafter, the PVA-PAA copolymer with uncontrolled hydrolysis degree is referred to as 'PVA-PAA'.)

### (2) Hydrolysis of PVA-PAA polymer

Hydrolysis of PVA-PAA was performed using 150 g of ethanol and 17 g of sodium hydroxide (NaOH) at 65°C while controlling the hydrolysis reaction time. PVA-PAA, which underwent a hydrolysis reaction, was dissolved in distilled water and washed several times to produce a hydrolyzed PVA-PAA copolymer. (Hereinafter, depending on the degree of hydrolysis, the PVA-PAA copolymer with a hydrolysis degree of 30% is referred to as 'PAA-1', the PVA-PAA copolymer with a hydrolysis degree of 70% is referred to as 'PAA-3', and the PVA-PAA copolymer with a hydrolysis degree of 90% is referred to as 'PAA-5'.)

### Embodiment 1

### (1) Manufacturing of conductive polymer binder

Using 300 g of water as a solvent, 5 g of solid PAA-3, the receptor manufactured in the Preparation Example, and 5 g of EDOT (ethylenedioxythiophene), the conductive monomer, were mixed in a 1:1 ratio, and 10 g of initiator (APS, ammonium persulfate) was added to manufacture a conductive polymer binder 'PEDOT:PAA-3'.

### (2) Preparation of slurry

A mixture of 97 wt% graphite as an electrode active material, 2.5 wt% PVA-PAA as a binder, and 0.5 wt% PEDOT:PAA-3 was added to distilled water and stirred using a mechanical stirrer to prepare a slurry.

### (3) Manufacturing of electrode (negative electrode)

The manufactured slurry was applied to a 10 µm copper thin film, which is a negative electrode current collector, with a thickness of 300-400 µm, dried in a hot air dryer at 110°C for 1 hour, and then rolled using a roll press to manufacture a negative electrode.

### (4) Manufacturing of rechargeable batteries

The positive electrode, electrolyte (non-aqueous electrolyte containing lithium), and separator used in the manufacture of rechargeable batteries were purchased as NCM 622 (Korean, Welcos Co., Ltd.), 1M LiPF₆ DEC/EC FEC 1% (Korean, Solbrain), and polyolefin separator Celgard 2325 (USA, Celgard), respectively.

A lithium secondary battery was manufactured using the negative electrode, the positive electrode, the electrolyte, and the separator manufactured in the (3).

### Embodiment 2

Except that 'PEDOT:PAA-5' was manufactured using the PAA-5 manufactured in the Preparation Example as a receptor in the manufacture of the conductive polymer binder, the conductive polymer, slurry, electrode, and rechargeable battery were manufactured using the same method as in embodiment 1.

### Comparative Example 1

The slurry, electrode, and rechargeable battery were manufactured using the same method as embodiment 1, except that 97 wt% of graphite was used as the electrode active material, 3.0 wt% of PVA-PAA was used as the binder, and no conductive polymer was included.

### Comparative Example 2

Except that `PEDOT:PAA' was manufactured using PAA (aldrich) as a receptor in the manufacture of the conductive polymer binder, the conductive polymer, slurry, electrode, and rechargeable battery were manufactured using the same method as in embodiment 1.

### Comparative Example 3

Except that `PEDOT:PAA-1' was manufactured using the PAA-1 manufactured in the Preparation Example as a receptor in the manufacture of the conductive polymer binder, the conductive polymer, slurry, electrode, and rechargeable battery were manufactured using the same method as in embodiment 1.

### Experimental Example 1

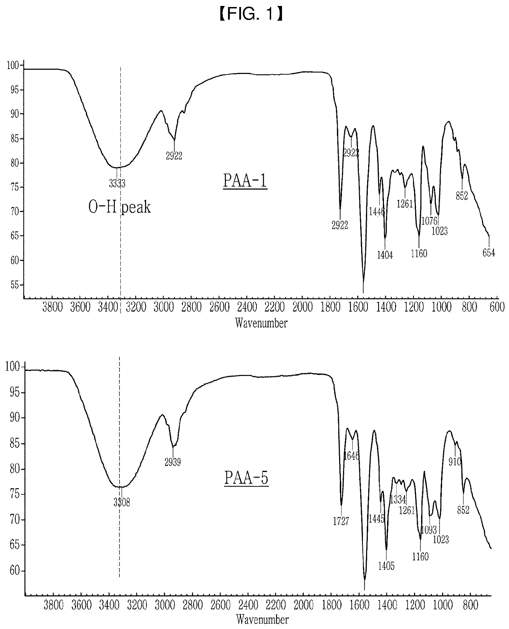

The hydrolysis degrees of PAA-1 and PAA-5 manufactured in the Preparation Example were confirmed via FT-IR and are shown in FIG. 1. As the degree of hydrolysis increases, more polar functional groups such as -OH and - COOH are included in the chain structure, so it was confirmed that PAA-5, which has a high degree of hydrolysis, has a larger size of the O-H peak around 3,300 cm⁻¹ than PAA-1.

### Experimental Example 2

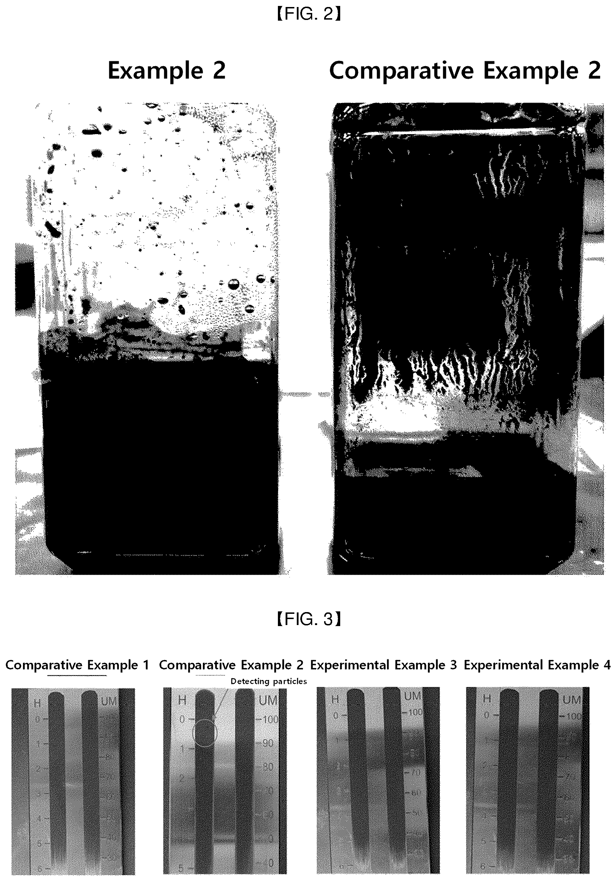

In order to examine the disperse safety of conductive polymers according to the degree of hydrolysis, the conductive polymer binders of embodiment 2 and comparative example 2 were placed in empty containers, and the stability and phase separation were observed for 15 days at 25°C, which are shown in FIG. 2. In the case of Embodiment 2, which used a receptor adjusted to have a high degree of hydrolysis, it was confirmed that excellent disperse stability was exhibited without phase separation, but in the case of Comparative Example 2, which used a receptor whose degree of hydrolysis was not adjusted, it was confirmed that phase separation occurred due to poor disperse stability.

### Experimental Example 3

The viscosities of the slurries of Comparative Example 1, Comparative Example 2, embodiment 1, and embodiment 2 were compared by visual observation, and the disperse stability was evaluated using a grind guage, and is shown in FIG. 3.

The viscosities of Embodiment 1 and Embodiment 2 including conductive polymer were visually compared with Comparative Example 1 not including conductive polymer material, and it was confirmed that the viscosity of the slurry did not increase or decrease. Through this, it was found that the material of the conductive polymer did not affect the viscosity of the slurry.

In addition, as shown in FIG. 3, in the case of embodiment 1 and embodiment 2 including conductive polymer, particles are not observed even below 30 µm on the grind gauge, confirming excellent slurry disperse stability. However, in the case of Comparative Example 2, particles are observed above 90 µm, confirming that the slurry disperse stability is not good. This is believed to be because the dispersion safety of the conductive polymer binder was reduced due to the use of a receptor whose hydrolysis degree was not controlled in the production of the conductive polymer.

### Experimental Example 4

The electrical conductivity of the electrodes manufactured in the embodiment and comparative example was measured using a sheet resistance meter and is shown in the following Table 1. In addition, the lithium secondary batteries manufactured in the embodiment and Comparative Example were charged and discharged 5 times under charge condition (0.1-0.5C) and discharge condition (0.1-0.5C) at 25°C, and the battery resistance and battery life-span characteristics (≥ 500 cycles) were evaluated under the condition of SOC 50%, which are shown in the following Table 1.

**(Table 1)**

| | Binder | Binder content in slurry (wt%) | Electrical conductivity (ohm*cm) | Battery resistance (DC-IR or EIS) | Battery life-span |
|---|---|---|---|---|---|
| Comparative Example 1 | PVA-PAA | 3 | 9.94E-02 | Ref | Ref |
| Comparative Example 2 | PVA-PAA + PEDOT:PAA | 3 | 3.27E-01 | Inferior | Very inferior |
| Comparative Example 3 | PVA-PAA + PEDOT:PAA-1 | 3 | 9.12E-01 | Ref Equivalent | Ref Equivalent |
| Embodiment 1 | PVA-PAA + PEDOT:PAA-3 | 3 | 6.41E-02 | Good | Good |
| Embodiment 2 | PVA-PAA + PEDOT:PAA-5 | 3 | 5.85E-02 | Good | Very good |

As shown in Table 1, in the case of the electrodes of Embodiments 1 and 2 including a conductive polymer manufactured using a receptor that satisfies the hydrolysis degree range of the present invention, it can be confirmed that the electrical conductivity of the electrodes is excellent compared to the electrodes of Comparative Example 1 to Comparative Example 3 that do not include a conductive polymer, use a receptor whose hydrolysis degree is not controlled, or use a receptor that does not satisfy the hydrolysis degree range of the present invention. And, it can be confirmed that the rechargeable batteries of embodiment 1 and embodiment 2 show improved battery characteristics with decreased battery resistance and increased battery life-span compared to the Comparative Examples. Comparative Example 3, embodiment 1 and embodiment 2 show that as the degree of hydrolysis of the receptor increases, the electrical conductivity of the electrode, battery resistance and battery life-span characteristics improve. Through this, it can be seen that as the degree of hydrolysis increases, the dispersion of the conductive polymer binder is improved and uniformly distributed within the electrode, and the electrical conductivity increases, which affects the performance improvement of the rechargeable battery.

### Experimental Example 5

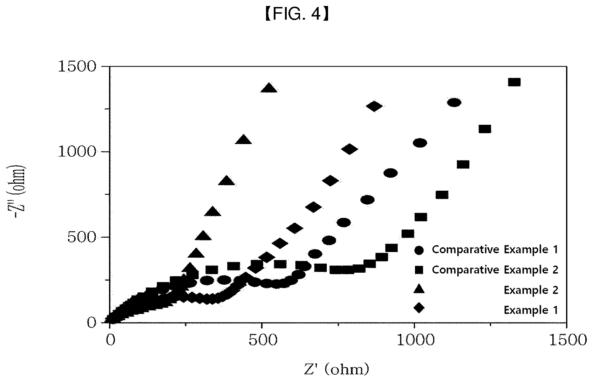

The lithium secondary batteries of Comparative Example 1, Comparative Example 2, embodiment 1, and embodiment 2 were manufactured in the form of Coin cell 2032, and the electrochemical evaluation results in which the battery resistance was measured using the EIS method while charging/discharging (charge-discharge) under the same conditions as Experimental Example 4 are shown in FIG. 4.

For embodiment 1 and embodiment 2, it was confirmed that the resistance was significantly reduced compared to Comparative Example 1 and Comparative Example 2, similar to the internal resistance result of Experimental Example 4, and it was confirmed that the greater the degree of hydrolysis of the receptor, the greater the degree of resistance reduction.

The present invention is not limited to embodiments, but can be manufactured in various different forms, and a person of ordinary skill in the technical field to which the present invention belongs will be able to understand that the present invention can be implemented in other specific forms without changing the technical idea or essential features of the present invention. Therefore, the embodiments described above should be understood as exemplary in all respects and not restrictive.

## Claims

1. A binder for a rechargeable battery, comprising:
a water-soluble polymer and a conductive polymer
wherein, the water-soluble polymer comprises a first copolymer,
the conductive polymer comprises a second copolymer and a polymer of a conductive monomer, and
the second copolymer has a degree of hydrolysis of more than 50% and an absorbance peak of more than 22% appearing at 3250 cm⁻¹ to 3350 cm⁻¹ in the FT-IR spectrum.

2. The binder of claim 1, wherein:
the first copolymer is a copolymer of a polymer containing polar functional groups and PAA, and the degree of hydrolysis is not controlled.

3. The binder of claim 1, wherein:
the first copolymer was PVA-PAA with uncontrolled degree of hydrolysis.

4. The binder of claim 1, wherein:
the second copolymer is a copolymer of a polymer containing polar functional groups and PAA, and has a controlled degree of hydrolysis.

5. The binder of claim 1, wherein:
the second copolymer is PVA-PAA with controlled degree of hydrolysis.

6. The binder of claim 1, wherein:
the conductive monomer is one or more, selected from the group consisting of EDOT (3,4-Ethylenedioxythiophene), a thiophene-based monomer, polyacetylene, polyaniline, and polypyrrole.

7. The binder of claim 1, wherein:
the conductive polymer contains the second copolymer to the conductive monomer in a weight ratio of 1:0.5 to 20.

8. The binder of claim 1, wherein:
the water-soluble polymer to the conductive polymer in a ratio of 4 to 6:1 is contained.

9. A slurry, comprising:
an electrode active material; and a binder of any one of claim 1 to claim 6.

10. The slurry of claim 9, wherein:
the electrode active material is contained at 95 to 99 wt%, with 100 wt% of the total slurry as a reference, and
the binder is contained at 1 to 5 wt%.

11. An electrode, wherein,
the electrode is formed by applying and drying the slurry of claim 9 on the surface of a current collector.

12. A rechargeable battery, comprising:
a positive electrode; a negative electrode; an electrolyte interposed between them; and a separator inserted between the positive and negative electrode,
at least one selected from the positive and negative electrodes is the electrode of claim 11.
